# EUROPEAN PATENT APPLICATION

(11) **EP 1 784 009 A2**
(43) Date of publication of application: **09.05.2007**
(21) Application number: 07002512.7
(22) Date of filing: 10.03.2004
(51) Int. Cl.: H04N 5/445

(54) **Methods and apparatuses providing synchronised electronic program guide**

(30) Priority: 10.03.2003 US 453591 P; 10.03.2003 US 453523 P; 10.03.2003 US 453526 P; 10.03.2003 US 453590 P; 10.03.2003 US 453525 P; 10.03.2003 US 453522 P; 10.03.2003 US 453592 P; 10.03.2003 US 453597 P; 10.03.2003 US 453524 P; 10.03.2003 US 453594 P; 10.03.2003 US 453606 P; 10.03.2003 US 453628 P; 14.04.2003 US 462621 P
(62) Divisional of application: 04718975.8
(71) Applicant: Indoor Outdoor Entertainment, S.A., 08950 Esplugues de Llobregat (Barcelona) (ES)
(72) Inventor: Villar, Enrique, 08950 Esplugues de Llobregat (ES); Mayor, Eduardo, 08950 Esplugues de Llobregat (ES); Del Val, David, 08950 Esplugues de Llobregat (ES); Martin, Gonzalo, 08950 Esplugues de Llobregat (ES); Zunini, Edgardo, 08950 Esplugues de Llobregat (ES); Domemech, Eudald, 08950 Esplugues de Llobregat (ES); Daurell, Albert, 08950 Esplugues de Llobregat (ES); Coderch, Marcel, 08950 Esplugues de Llobregat (ES); Fernandez, Jesus, 08950 Esplugues de Llobregat (ES)
(74) Representative: Gallego Jiménez, José Fernando

(57) **Abstract**

Disclosed herein are methods and apparatuses that provide a synchronized electronic program guide (EPG). EPG data is continuously provided from a media server (300) to associated media centers (334) to synchronize the EPG data with the most recent programming changes implemented by broadcast content providers. In one aspect, a single EPG database (361) may be used to describe content provided from a variety of broadcast sources. Each of the media centers (334) will determine which content is relevant to a particular user based upon user inputs. In addition, the media centers (334) will also know to which content a user does not subscribe, and will accordingly filter that portion of the EPG data. Another aspect of the synchronized EPG is its ability to automatically adjust the recording times of digital video recorded in the media center (334) based upon last minute programming changes received via instantaneous updates, even as the program is being recorded. In another aspect, a recorded broadcast program may be annotated in real time, which allows a user to efficiently move to relevant portions of the program. Another feature is the ability to identify specific broadcast programs based upon a variety of search or mood factors. For example, a user may select content to be viewed or recorded based upon a particular mood, such as entertainment, educational, inspirational, or romance. These program selection features can be implemented either at the server level or at the client level for an added level of security.

## Description

### TECHNICAL FIELD

This application relates to the provisioning of programming information to users of home media devices.

### BACKGROUND

Since the invention of television, viewers have continued to ask one primary question: What's on TV? During the early days of television, only a few channels were available for viewers to tune in and watch. As this broadcast medium continued to gain popularity, more and more channels were added to the broadcast line-up, giving viewers a greater variety of programming. Eventually, as digital terrestrial, cable and satellite systems became widely available, hundreds of channels have become available to viewers. As may be expected with so many channels, answering the question of what's on TV has become increasingly complicated. Conventional systems and devices for receiving programming, and their associated programming guides for informing viewers of upcoming programming, have also seen dramatic change as time has passed. Unfortunately, even the most sophisticated conventional systems still fail to provide a number of "common sense" conveniences contemporary users desire.

### BRIEF SUMMARY

The disclosed method and apparatus provide, in one aspect, a synchronized electronic program guide (EPG). EPG data is continuously provided from a media server to each of the media centers to synchronize the program data stored in each of the media centers with the most recent programming changes implemented by the broadcast content providers.

One aspect of the disclosed method and apparatus is that a single EPG database may be used to describe content provided from a variety of broadcast sources. For example, the EPG that is provided to each of the media centers will contain the program guide information corresponding to a variety of pay-TV and other media content providers, such as digital satellite programming, digital cable programming, analog broadcast programming, and digital terrestrial programming. Each of the individual media centers will determine which content is relevant to a particular user based upon the inputs provided by the user. For example, a media center that is connected to a digital satellite source, as well as an analog broadcast source, will provide a synchronized EPG describing the programming that is available from both of these sources. In addition, the media centers will also know to which content a user does not subscribe, and will accordingly filter that portion of the EPG data for the user.

Another aspect of the synchronized EPG is its ability to automatically adjust the recording times of the digital video recorded in the media center based upon last minute programming changes. Many last-minute programming changes can be implemented by broadcasters in a way that conventional EPGs are not equipped to deal with. The disclosed method and apparatus, however, has the ability to receive instantaneous updates of changes to broadcast programming and thereby adjust any recording settings in the media center to account for these changes, even as the program is being recorded.

Another aspect of the disclosed method and apparatus is the ability to annotate a broadcast program in real time. Program annotations can include significant events that occur during a program, such as a goal in soccer or a home run in baseball, or it can simply indicate when a commercial break occurs during a program. These annotations allow a user to move to relevant portions of a broadcast program efficiently. Another relevant feature of the disclosed method and apparatus is the ability to identify specific broadcast programs based upon a variety of search or mood factors. Some of these factors can be based upon user preferences, such as user-provided viewing preferences, user-provided demographic data, or a user's viewing history. According to another embodiment, a user may select content to be viewed or recorded based upon a particular mood, such as entertainment, educational, inspirational, or romance. These program selection features can be implemented either at the server level or at the client level for an added level of security.

### BRIEF DESCRIPTION OF THE DRAWINGS

For a more complete understanding of the present disclosure, and the advantages thereof, reference is now made to the following descriptions taken in conjunction with the accompanying drawings, in which:
FIGURE 1 illustrates a conceptual block diagram illustrating various techniques in accordance with the principles disclosed herein;
FIGURE 2 illustrates one embodiment of an environment in which the disclosed technology can be utilized;
FIGURE 3 illustrates representative embodiment of a media servicing system;
FIGURE 4 illustrates a high level depiction of two alternate paths by which video-on-demand data can be transmitted from the media server to the media centers;
FIGURE 5 illustrates a representative example of a megatext file that may be provided to a user;
FIGURE 6 illustrates an alternative megatext screen;
FIGURE 7 illustrates one aspect of an HMC configuration server;
FIGURE 8 illustrates a representative embodiment of an electronic program guide database;
FIGURE 9 illustrates an electronic program guide utilizing the data in the EPG database;
FIGURE 10 illustrates an alternative embodiment of an electronic program guide utilizing the data in the EPG database;
FIGURE 11 illustrates a flowchart for the operation of a DVR system employing the hot channel record feature disclosed herein;
FIGURE 12 illustrates a flowchart for the configuration and operation of one embodiment of the automatic recording agent (the "Butler") disclosed herein;
FIGURE 13 illustrates a process by which a "full update" of the electronic program guide database is performed;
FIGURE 14 illustrates a representative process flow of a "schedule update";
FIGURE 15 illustrates a process by which an "annotation update" of the electronic program guide database is performed;
FIGURE 16 illustrates a flow diagram depicting the "hot update" process;
FIGURE 17 illustrates a screen shot of the EPG user interface screen, which provides an illustration of different ways in which programs can overlap; and
FIGURE 18 illustrates a flowchart for the resolution of conflicts that can occur when multiple resources within the system request recording of different video broadcast programs at the same time.

### DETAILED DESCRIPTION

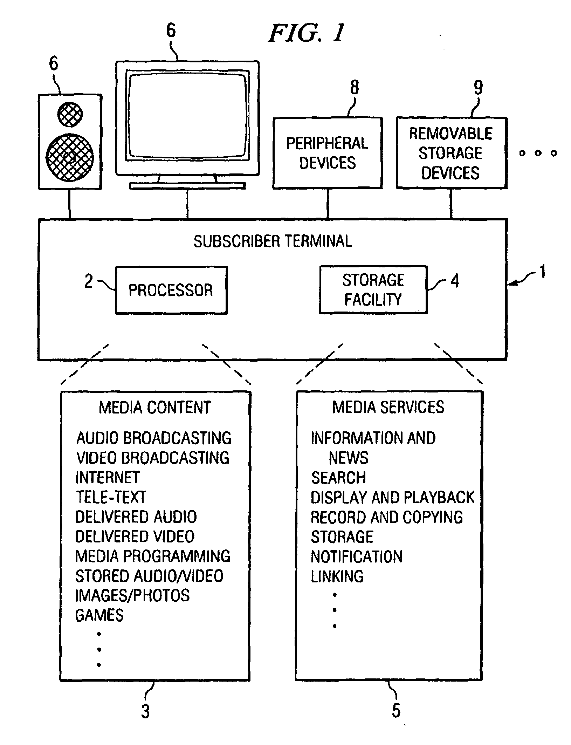

Referring initially to **FIGURE 1,** a conceptual block diagram illustrating various techniques in accordance with an exemplary embodiment. A subscriber terminal 1 is associated with one or more users or subscribers at a given location. That terminal 1 is provided with a storage facility 4, such as a hard disk drive, and a processor 2.

Various exemplary output devices are coupled to the subscriber terminal 1 for rendering or storing media content supplied by the terminal 1. For instance, an audio output device, such as a speaker 6, may be coupled to the terminal 1 to render audio for hearing by the user. Similarly, a display 7, such as a television set, may be coupled to the terminal 1 to render video (having associated audio tracks) for viewing (and hearing) by the user. Peripheral devices 8, such as, for example, game stations, camcorders, and other devices, as well as removable storage devices 9, such as CDs, DVDs and the like, may also be coupled to the terminal 1 to respectively store or render media content.

In addition, a wide array of media content 3 is identified in FIGURE 1. Broadcast video-such as channels broadcast by satellite and cable operators (for example, DirecTV and

Comcast) together with free-to-air video provided via conventional antennas-is one form of media content 3. Broadcast audio, as presently supplied via conventional antennas or more recently by satellite operators (for example, XM radio) are another form of media content 3. Internet content, as found on various websites, and related media programming are yet other types of media content 3 supplied to the terminal 1, which is supplied upon request by a user as opposed to at a scheduled time, are still other types of supplied media content 3. Other examples of supplied media content 3 include tele-text, stored audio and/or video (for example, DVDs and compact discs), images and/or photographs, and games.

Media services 5 associated with the diverse types of supplied media content 3, including related information, are also supplied to the subscriber terminal 1. Such media services 5 provide a user with management and control type functions in conjunction with the supplied media content 3. As identified in FIGURE 1, diverse different media service 5 type functions are presented to a user. Such media services 5 may include, but are not limited to, informational and news related functions (for example, programming information, guides, commentary, textual messaging, news alerts); search related functions and queries; display and playback related functions (for example, program selection, fast forwarding, and time shifting); recording and copying related functions; storage related functions (for example, storage and retrieval of files, organizing files, and cataloguing type functions); notification related functions (for example, alarms and alerts); commerce related functions; and linking related functions.

Since it is common that multiple media sources are supplied or otherwise provided to a subscriber through various operators, the ability to provide for an integrated system to allow a user to manage the above mentioned media content 3 so as to avoid having to employ multiple different systems, is highly desirable.

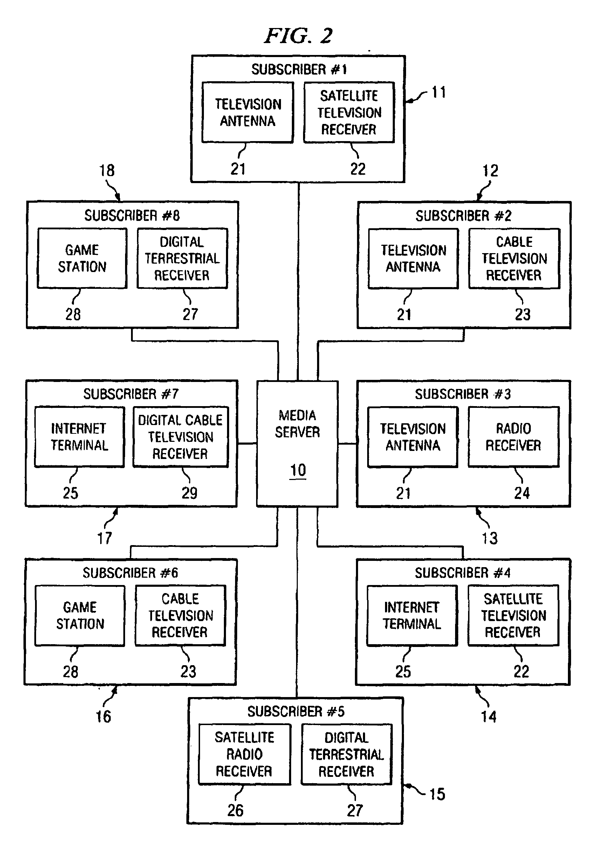

Referring now to **FIGURE 2**, the environment in which the disclosed technology can be utilized is illustrated, in accordance with an exemplary embodiment. A media server 10 is operable to distribute various programming and other information, as well as applications to process such information, to various geographically dispersed outlets, i.e. user premises or households. An outlet may be supplied by a single media source or by multiple diverse media sources.

Exemplary outlets 11-18 are illustrated in FIGURE 2. These exemplary outlets 11-18 each access one or more media sources: outlet 11 includes a TV antenna source 21 and a satellite TV receiver 22 for subscriber #1; outlet 12 includes a TV antenna source 21 and a conventional cable TV receiver 23 for subscriber #2; outlet 13 includes a TV antenna source 21 and a conventional analog radio receiver 24 for subscriber #3; outlet 14 includes an internet terminal 25 and a satellite TV receiver 25 for subscriber #4; outlet 15 includes a satellite radio receiver 26 and a digital terrestrial receiver 27 for subscriber #5; outlet 16 includes a game station 28 and a conventional cable receiver 23 for subscriber #6; outlet 17 includes an internet terminal 25 and a digital cable TV radio receiver 29 for subscriber #7; and, outlet 18 includes a game station 28 and a digital terrestrial receiver 27 for subscriber #8.

The TV antenna source 21 is the source by which broadcast television signals transported between antennas are provided to an outlet 11-18. In contrast, the satellite TV receivers 22, conventional cable receivers 23, and digital cable TV receiver 29 are receivers respectively associated with conventional satellite and cable distribution systems. Similarly, the radio receiver 24 is a conventional radio receiver that receives RF audio signals via an antenna.

It should be appreciated that the various outlets 11-18 and associated media sources illustrated in FIGURE 2 are merely exemplary. That is, the server 10 is intended to be operable with any outlet configuration and diverse media sources, whether presently used or intended to be use in the future. The ability to continually adapt applications and servicing information for new or later adapted media sources is an advantage provided by this distributed architecture in which the server 10 may continually reconfigure the associated applications and data.

It should also be appreciated that while a singular media server 10 has been referred to above, multiple servers may provide the various functions described with respect to that media server 10. For example, when using multiple servers, each server may be assigned a particular functionality; that is, one server may handle programming information for one or more different media sources while another server may handle billing type applications and services.

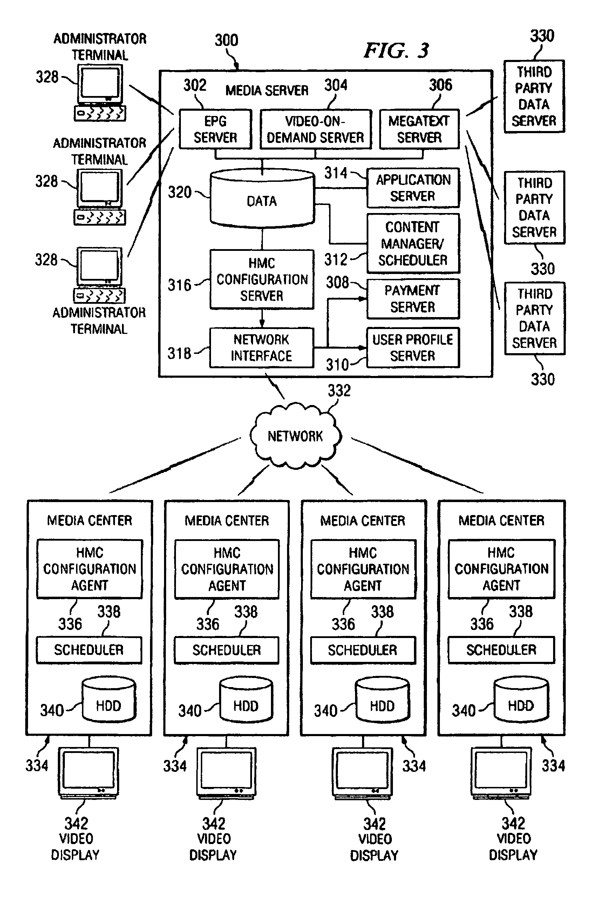

A representative embodiment of a media servicing system is depicted in **FIGURE 3**. In FIGURE 3, the media server 300 is depicted as comprising several components including an electronic program guide (EPG) server 302, a video-on-demand server 304, a megatext server 306, a payment server 308, a user profile server 310, a content manager/scheduler 312, a home media center ("HMC") configuration server 316, a network interface 318, and a data repository 320. The EPG server 302, the video-on-demand server 304, the megatext server 306, the content manager/scheduler 312, and the application server 314 are all connected to a centralized database repository 320 so that data can be stored, modified and moved within the repository 320. In addition, the EPG server 302 can be connected to one or more administrative terminals 328 to receive information provided by an administrator. The megatext server 306 can also be connected to third party data servers 330, which are used to provide data to the megatext server 306 in either a push, pull, or direct feed format.

The media server 300 is operable to communicate with one or more media centers 334 through a communications network 332. The communications network 332 may comprise any of a variety of packet-based communications systems, such as digital satellite, digital cable, digital terrestrial or telephony-based networks. Each of the media centers 334 comprises at least one hard disk drive (HDD) 340, an HMC configuration agent 336, and a scheduler 338. Also connected to each media center 334 is a display device 342 that may comprise a television set, a flat screen display, or any other kind of visual display system.

The EPG server 302 is operable to receive data from one or more administrative terminals 328. Each of these administrative terminals 328 is manned by an individual that is keying in data regarding current broadcast programs. The broadcast programs can include a variety of broadcast formats such as satellite television, cable television, analog television, or digital terrestrial television. Each of these formats could be covered by a single electronic program guide. The data provided by the administrative terminals 328 can comprise a variety of information, including the start and stop times of a program, title, genre, a description, and keywords associated with that program. As this data is provided to the EPG server 302, it is loaded into the associated database repository .320 where it is stored for later processing.

The video-on-demand server 304 is utilized to "push" video content onto each of the respective media centers 334 so that it can be accessed by a user of a media center 334 at his/her convenience. This video content can be in the form of full-length feature movies, interactive channels, or shorter video clips, such as television programs or advertisements. In order to efficiently transmit this video content to the media centers 334, the video content can be broken up into smaller segments and compressed according to formats, such as ZIP or MPEG. After this, the video content is stored in the database repository 320 until it is determined that it should be transmitted to the media centers 334. According to one embodiment, a new feature length movie can be transmitted and saved to each of the media centers 334 every day.

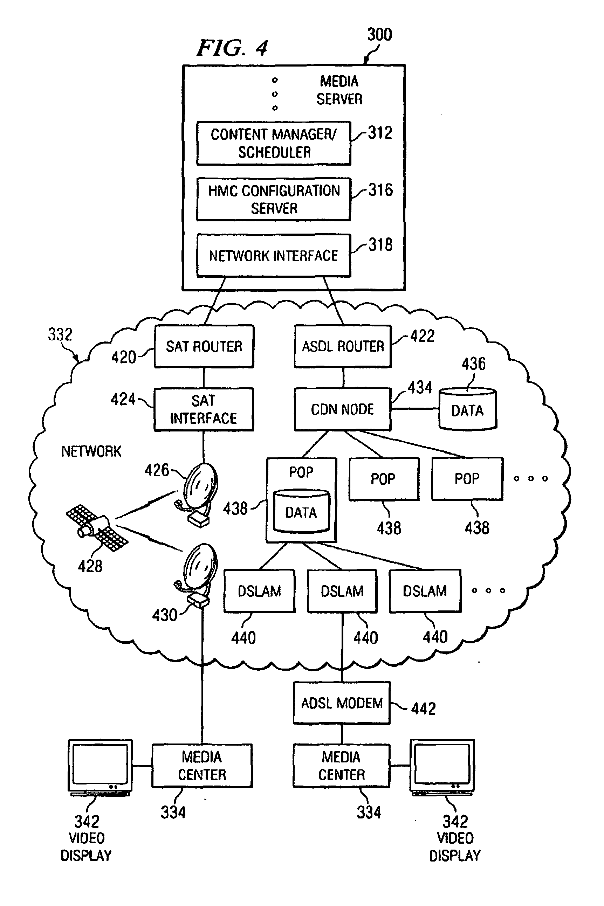

A high level depiction of two alternate paths by which video-on-demand data can be transmitted from the media server 300 to the media centers 334 is depicted in **FIGURE 4**. The media server 300 comprises a content manager/scheduler 312, a HMC configuration server 316, and a network interface 318. The packet-based network 332 is depicted in detail. In particular, two paths for the transmission of data from the media server 300 to the media centers 334 are depicted. A first path utilizes satellite communications to reach its respective media centers 334. A second path uses an ADSL network to transmit data from the media server 300 to the media center 334.

For data that is to be provided over the satellite path, it is first loaded into the satellite network entry router 420. After this, the data is loaded into a satellite interface 424 that formats the data for transmission over the satellite physical layer. After this occurs, the data is transmitted from a first satellite base station 426 to a satellite 428 where it is then relayed to another satellite base station 430. Typically, each media center 334 will have one or more satellite base stations configured to receive data therefrom. Accordingly, the receiving base stations 430 will typically be dispersed throughout a wide geographic region. After the data is received by the second satellite base station 430, it is provided to the media center 334, which converts the data from a satellite format, such as DVB-MPE, into a format suitable for processing by the media center 334, such as a TCP/IP packet. After the data has been appropriately converted, it may be stored on the HDD 340 and/or presented on the video display 342. Thus, through a combination of a push model and a set-top box with an HDD, a video-on-demand service through a one-way satellite network is possible.

It is important to notice that this VOD system can also be carried out over other one-way networks, such as digital terrestrial networks. The system would work as described in the previous paragraphs, replacing the satellite physical network and entry routers by digital terrestrial networks and routers.

If data is to be transmitted over the ADSL network, it is first sent to an ADSL network entry router 422. After being sent to the router 422, the file or files will be sent to a content delivery network (CDN) node 434. The CDN node 434 is used to cache a group of related files at a single location so as to prevent the network interface 318 from being overloaded. The cached copy of the files are stored in a database 436 associated with the CDN node 434. For example, if a feature length movie is to be distributed to the ADSL network, an MPEG file or a series of MPEG packets will be sent to the CDN node 434 where they are stored in the corresponding database 436. After the files are stored in the CDN node 434, they can be distributed to one or more point-of-presence (POP) servers 438, each of which have a corresponding database. Only one copy of the movie file needs to be sent to each POP server 438. Typically, each of these POP servers 438 will be located in a separate geographical region. Each of these POP servers may then provide the file(s) to a Digital Subscriber Line Access Multiplexer (DSLAM) 440, which can then forward the files on to an ADSL modem 442 at the user's premises. In this manner, files of relatively large size, such as feature-length movies, can be efficiently "pushed" through an ADSL network without overloading the media server 300. After these files are received by the ADSL modem 442, they are received by a media center 334 where they can be stored and eventually displayed on the video display 342.

Both of these distribution systems are particularly well suited for a broadcast distribution model because they allow a large amount of content to be pushed down to the media center 334 without overloading the upstream servers, such as the network interface 318 and the routers 420, 422.

Looking back again to FIGURE 3, the megatext server 306, as mentioned above, receives data from one or more third party data servers 330. The megatext server 306 can also receive data directly from a terminal at the media server 300. The third party data servers 330 can provide a variety of data, including, sports updates, news, traffic, weather, horoscopes, jokes, etc. Although the data received from these third party servers 330 can be in a variety of formats, the data may be converted into a single standardized format, where the preferred format for data received from third party servers 330 is XML. After the data has been received and converted by the megatext server 306, it can be merged with a template providing its formatting and arrangement, such as an XSL file, to create a megatext file. After being merged with a template, the megatext file is stored in the database repository 320. At certain designated times, the megatext files are "pushed" from the database repository 320 to each of the media centers 334. Each of these megatext files can be considered "dynamic data" because it may be continuously updated with new information. This "dynamic data" can be merged with certain "static data" at each of the media centers 334 to form a rich multimedia experience that is presented to the user on his/her video display 342.

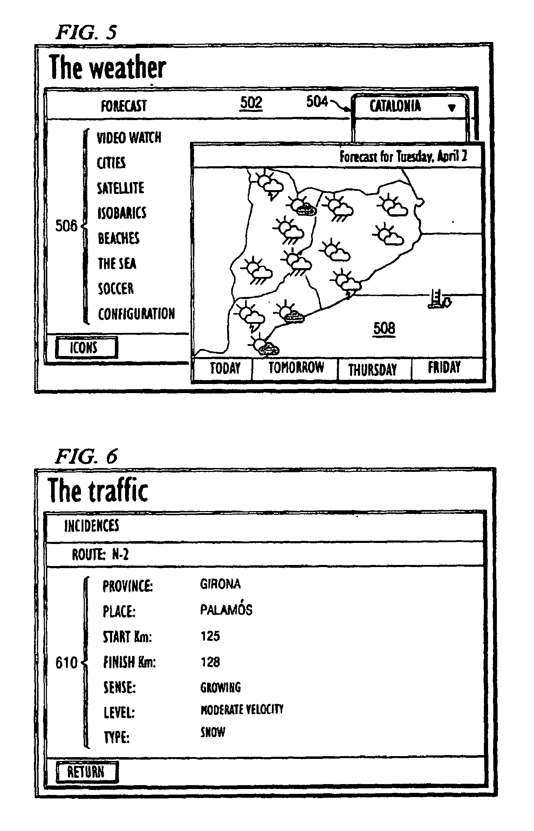

A representative example of a megatext file that is provided to a user is depicted in **FIGURE 5**. In FIGURE 5, a megatext weather page is depicted. This weather page comprises several components including a title bar 502, a region selector 504, a list of weather-related options 506, and an interactive window 508. The interactive window 508 comprises several components including an image showing weather forecast information, buttons at the bottom of the window corresponding to weather forecasts for specific days, and a title bar at the top indicating to which day the forecast corresponds. The region selector 504 allows a user to select a weather forecast corresponding to a different region. The title bar 502 describes the title of the weather-related page that is being presented. Lastly, the weather-related options 506 allow a user to select which type of interactive window to be presented in this page. For example, a user could select a satellite image to be presented in the interactive window 508. This would cause an MPEG movie to be presented inside the interactive window 508. The images, videos and other information presented in the interactive window 508 correspond to dynamic data that is broadcasted to the media center 334 by the media server 300 on a periodic basis, and stored on the HDD 340 during just a few days, while it remains current. On the other hand, many of the other components in FIGURE 4B, such as the background view, the list of weather-related options, and the selectable buttons, are stored permanently as static data on the HDD 340 of the media center 334.

An alternative megatext screen is depicted in **FIGURE 6.** In FIGURE 6, dynamically updated traffic information is presented to a user. In FIGURE 6, it can be seen that only textual data is provided as dynamic information. Specifically, the incident report 610 depicted in FIGURE 6 comprises only textual information describing where the traffic is moving slowly.

Referring again to FIGURE 3, a content manager/scheduler 312 is operable to assign certain tags or identifiers associated with the files in the database repository 320. These tags can comprise a variety of information, such as a priority associated with the file, a target ID indicating which media centers 334 should accept files, and a schedule as to when the file should be broadcast to the media centers 334. Some of the target ID can include a box ID corresponding to a specific media center 334, a community ID corresponding to a group of media centers 334 sharing a common factor or similar demographic information, corresponding to a particular subset of users meeting certain demographic criteria. Accordingly, the content manager/scheduler 312 determines what data will be provided to each of the media centers 334 and when the broadcast will occur. For example, the media server 300 may be setup such that the megatext files stored in the database repository 320 is downloaded to each of the media centers 334 several times a day.

The HMC configuration server 316 comprises of plurality of folders having directories and subdirectories, each corresponding to a specific type of content (i.e. EPG data, megatext data, etc.). The HMC configuration server 316 acts as a broadcast queue such that data that is stored therein will be immediately queued for broadcast through the communications network 332 via the network interface 318. The network interface 318 comprises an interface between the servers in the media server 300 and a packet-based communications network 332. According to one embodiment, the network interface 318 utilizes an internet-related protocol, such as TCP/IP or UDP/IP, so that the data may be provided over any of a variety of packet-based communications networks.

The HMC configuration server 316 also performs several other functions that dictate how data is broadcast from the media server 300 to the media centers 334. More specifically, the HMC configuration server 316 allocates the amount of bandwidth that will be available for transmission of a certain data packet. According to one embodiment, the HMC configuration server 316 uses the priority tags that have been associated with a particular file to determine how much bandwidth should be assigned for the transmission of that file.

For example, if three kinds of priority tags are associated with the data (high, medium, and low), all data being marked with the top priority will be broadcast first, then all data marked with the second priority, followed by all data marked as third priority. If a data file marked as first priority is loaded into the HMC configuration server 316 as a group of second priority data files is being transmitted, then the transmission of these second priority data files will be interrupted and the first priority data file will be sent.

Another function performed by the HMC configuration server 316 is the implementation of forward error correction. As is well known in the art, one way of performing forward error correction is to repeat the transmission of a set of data packets until all of the recipients have received a complete set of the data packets. Accordingly, the HMC configuration server 316 will instruct the network interface 318 to automatically repeat the transmission of certain types of data to ensure that all data packets are received by the media centers 334. For example, the HMC configuration server 316 could instruct the network interface 318 to perform the following:
- Text files - compress the files, packetize the files, transmit the files, packetize the files again, and retransmit the files;
- Binary files - perform the same steps as Text files;
- Picture files - treat the header of the picture file as a binary file, send the body of the picture file once with no compression; and
- Video files - do not compress the files, and do not repeat the transmission of the files.

Another form of error correction that is implemented by the HMC configuration server 316 is cyclic redundancy check (CRC) error correction so that the integrity of each data packet can be confirmed when it is received.

Although the previously described servers are utilized to provide data to the media centers 334, the media server 300 also comprises servers that receive data from the media centers 334. In particular, the user profile server 310 receives, sorts, and stores data related to users of the media centers 334. This data is provided by a user when his/her corresponding media center 334 is initially activated. Such data can include user name, address, demographic information, billing information and viewing preferences. According to one embodiment, this profile information may be periodically updated by selecting additional information at each of the media centers 334 and transmitting that information to the media server 300.

Also depicted in FIGURE 3 is a payment server 308 that receives data from the media centers 334. The payment server 308 is used to process billing information for any additional products or services ordered by a user at his or her media center 334. The payment server 308 can be connected to a credit card or debit card processing network (not shown), or it can be used to keep a running account of the additional services and products purchased by a user. In one embodiment, a media center 334 will keep a running count of all goods and services purchased by a user during a month. At the end of the month, the media center 334 will transmit these purchases to the payment server 308 in the media server 334 so that the user will be properly billed for these costs.

As described previously, the communications network 332 can comprise any of a variety of packet-based communication networks, including, for example, digital satellite, digital cable, digital terrestrial, or telephony-based networks. If a satellite communications network is utilized to transmit data to the media centers 334, then it is likely that an alternative communications network, such as dial-up Internet access, will be used as an upstream communications path. Other aspects of the media system 300 will be described in further detail below.

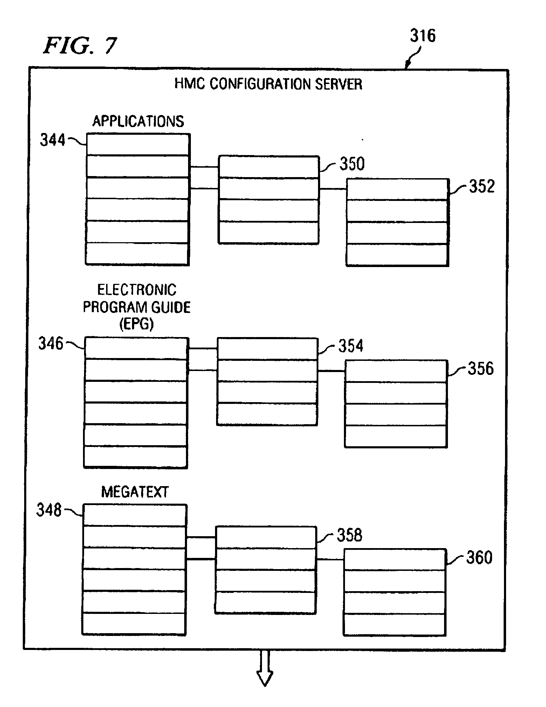

One aspect of an HMC configuration server 316 is depicted in **FIGURE 7**. The HMC configuration server 316 of FIGURE 7 is depicted as comprising three separate folders, an applications folder 344, an electronic program guide folder 346, and a megatext folder 348. Other folders (not shown) can include a broadcast video-on-demand folder, a microchannel folder, etc. Each of these folders further comprises a plurality of subdirectories 350-360. As described previously, each of these folders and subdirectories corresponds to a particular type of data that is to be stored therein. Furthermore, each of the files that are stored in these folders and subdirectories will have priority data, targeting data, scheduling data, and error correction data (i.e. checksums) associated therewith.

The HMC configuration server 316 essentially serves as a batch distribution buffer. In other words, as soon as data is loaded into the HMC configuration server 316 it will be broadcast from the network interface 318 in accordance with the priority associated with the data. Accordingly, data may not be loaded into the HMC configuration server 316, until the designated time provided by the content manager/scheduler 312.

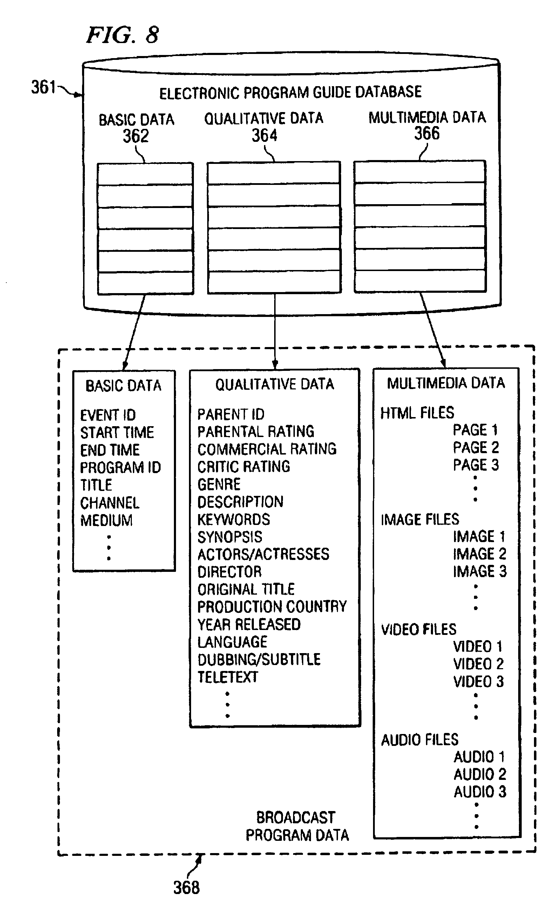

A representative embodiment of an electronic program guide database 361 is depicted in **FIGURE 8**. In FIGURE 8, the EPG database 361 is depicted as comprising three components: a basic data folder 362; a qualitative data folder 364; and a multimedia data folder 366. The depicted embodiment of the EPG database 361 is a relational database in which information corresponding to a single broadcast program will be stored in each of the three depicted folders. For example, the start time, end time, title, program ID, channel, broadcast medium, and event ID corresponding to a particular program will be stored in the basic data folder 362. Other data corresponding to that broadcast program, such as parental rating, commercial rating, critic rating, genre, and description, *inter alia,* will be stored in a corresponding entry in the qualitative data folder 364. Lastly, multimedia data 366 corresponding to the particular broadcast program, such as an HTML file, an image file, a video file, or an audio file, will be stored in a corresponding multimedia data folder 366.

The data that is stored in the EPG database 361 can be stored according to a variety of formats including, for example, XML. This data can be provided to the EPG database 361 by individuals at the administrative terminals 328, or it can be provided automatically by the broadcaster of the particular program. Although some of the data stored in the EPG database 361 is fairly standardized (such as a program's title, start time, end time, channel and medium) a great deal of the content contains unique and creative content. For example, the EPG database 361 contains keywords, HTML pages, video files, and critical ratings associated with many of the broadcast programs stored in the database 361.

As described in the above-mentioned provisional patent application entitled "Integrated Media Techniques and System," the media centers 334 can receive and manage content from a wide variety of sources. For example, each media center 334 is operable to manage content from a variety of pay-TV sources, such as digital cable, digital satellite, and digital terrestrial sources. Each of these pay-TV sources can have a variety of subscription packages available to the user. For instance, some subscribers of a digital satellite TV service may only subscribe to a basic package that provides "basic cable" channels, such as news, music videos, and regional sports networks. Other subscribers, however, may purchase channels from more than one satellite and have a much broader selection of channels. Furthermore, the availability of certain channels will vary based upon the geographic location of the media center 334. Accordingly, each user of a media center 334 is likely to have a highly individualized list of channels that are available.

It is desirable to provide updated programming information to all users so that they are aware of programming changes, new channels, and changes in program start and stop times. This is somewhat complicated by the highly-individualized list of channels that are available to users of the system. Indeed, it is preferable that a user's "available channel list" be automatically updated whenever new channels are added to his broadcast region, or when channels are added or removed from his pay-TV subscription package. The disclosed system and apparatus can use a variety of techniques to automatically maintain this "available channel list" and update the user's programming guide so that only the relevant information is presented to the user in his/her programming guide window.

According to one embodiment, maintenance of the "available channel list" and preparation of a personalized programming guide is done at the client side of the server-client arrangement depicted in FIGURE 3. The first step of this process occurs when the media center 334 is being utilized and searches all of the RF channels that are available to it. Each of the available RF channels is stored within the user's "available channel list" in the media center 334. Next, the user is queried to determine if he/she subscribes to any pay television services (e.g., digital satellite, digital cable, digital terrestrial, etc.). The user then selects the pay-TV service and the specific package (e.g., basic package, premium package, movie channel package, etc.) to which he/she subscribes. Based upon this information, the media center 334 generates a complete "available channel list" (the user's personalized view of the EPG) that is stored in the media center 334. A complete set of all EPG data is then broadcast to each of the media centers 334. This complete set will contain data related to all channels and all programs, regardless of whether this data is included in the "available channel list" for a particular user. Although an entire set of EPG data is stored in each media center 334, the media center 334 will only present the data relevant to the user's "available channel list" when the user requests information about his personalized programming guide. Accordingly, the "available channel list" acts as filter at the media center 334 to present only those channels that are relevant to a particular user.

From time-to-time, the content providers may change the listing of channels that are available for a particular package of pay-TV services. For example, the content provider could change the channels available in a "basic cable" package or add new channels to a "premium package" service. When this occurs, a "package update" will be sent from the media server 300 to each of the media centers 334 describing the changes in the particular package to which the user subscribes. This package update is used to update each user's "available channel list" so that the user is automatically made aware of any programming changes. In this manner, a change in the available channels for a package will be automatically implemented on a user's media center 334 without any involvement by the user. In addition, the framework for the "available channel list" can be configured by the user to place the broadcast channels in a certain order and to form groups of related channels. This arrangement is advantageous to the user because it allows him to arrange the channels in the order that are most convenient to him/her,

According to another embodiment, maintenance of an "available channel list" and preparation of a personalized program guide can be done at the server side of the server-client arrangement depicted in FIGURE 3. The first step of this process is to update and store a complete version of the EPG database 361 in the database repository 320 of the media server 300. After a complete EPG database 361 is updated and stored in the database repository 320, the media server 300 will create different versions of the EPG data corresponding to the variety of regional differences and package subscriptions that are available to the users of the media centers 334. Next, target IDs corresponding to individual media centers 334 or media center communities are associated with the different versions of the EPG data. After all of the targeting information has been assigned, all of the versions of the EPG data will be broadcast to all of the media centers 334. Each of the respective media centers 334 will use the targeting information to filter out which versions of the EPG data are relevant to it and which versions should be disregarded. The accepted version(s) of the EPG data will be stored in the media center 334 and thereby made available to the user when so requested. By preparing the versions of the EPG data at the server side, new versions of the subscription packages need not be broadcast to all of the media centers 334. Instead, the subscription package need only be updated at the server and the appropriate versions of the EPG data will be broadcast to the relevant media centers 334.

One aspect of the electronic program guide is the ability to synchronize EPG data on a user's media center 334 with the actual programming that is being broadcast. By synchronizing the user's EPG data, a variety of rich features can be implemented. According to one embodiment, the disclosed system utilizes three different kinds of program guide synchronizations: a "schedule update" synchronization, an "annotation update" synchronization, and a "hot update" synchronization. Each of these synchronization updates are summarized below.

A "schedule update" synchronization process can be used to handle a situation where a program has been moved to another time slot, has been cancelled, or will be preempted by other programming, such as a newscast. The "schedule update" will be broadcast to the media centers 334 in accordance with one of the two update embodiments described above. The schedule update will comprise basic data describing the last-minute changes in the broadcast programming. According to one embodiment, a schedule update will be broadcast from the media server 300 once or twice a day, as programming schedules are changed.

An "annotation update" synchronization process is used to add annotations to broadcast programs that enable convenient features for a user. Preferably, annotation updates are broadcast to the media centers 334 while the program is being broadcast. However, annotation updates can be sent before or after the completion of a program. Annotation data can include timing that corresponds to certain events in the program, such as periods or quarters in a sports program, commercial interruptions, or particular segments in a news program (e.g., headlines, weather, sports, etc.). The annotation synchronization process takes place when one or more annotation updates are broadcast from the media server 300 to the media centers 334.

Another kind of synchronization that can occur is a "hot update," which synchronizes the actual start and stop times of a particular broadcast program with the EPG data stored in the media centers 334. By synchronizing the EPG data in the media center 334 with the actual start and stop times, any material recorded before the start and after the stop of the desired program can be eliminated, thus making viewing of the program more convenient for the user. Hot updates can also be used to handle the situation where a particular program is running longer than its scheduled time-slot. If such a situation arises, a hot update can be sent to the media centers 334 informing them that the stop time for the program will actually be later than planned thereby instructing any media centers 334 that are recording the program to keep recording. In this manner, the media centers 334 can automatically adjust their recording feature to capture the entirety of a program that runs long.

A variety of other features are enabled by the qualitative data 364 that is included in the EPG database 361. For example, features such as a program search function, a program "mood" search feature, matching of broadcast content with a user profile, and a synchronized electronic program guide can be implemented. Each of these features is described in more detail below. The program search function allows a user to search for broadcast content that matches specific search criteria. The searching and matching features use the keywords, genres, descriptions and other information in order to identify specific content for processing. Because the qualitative data 364 contains a variety of data, the search feature can be highly customized. For example, a user may desire to search for action movies (genre) that are suitable for all family members (low parental rating). By providing this information to the search engine of the media center 334, broadcast content matching this criteria can be identified in the EPG data. Once the results of the search are presented to the user, he/she can select programs from the results list for reminders, viewing, or recording.

In another embodiment, a "mood search" feature can be utilized. The mood search feature uses certain mood keywords to find broadcast content that is consistent with a mood of the viewer. This feature, of course, requires that appropriate keywords be associated with content categories and subcategories in the EPG database 361. A representative example of mood categories and their associated categories and subcategories is listed below in Table 1:

**TABLE 1**

| **Mood** | **Category** | **Subcategory** |
|---|---|---|
| Good Movies | Movies | All |
| Adventure | Series | Action & Adventure |
| Educational | News | Other |
| | Programs | Cultural Documentary |
| | Series | Drama |
| | Movies | Other |
| Sports | News | Sports |
| | Sports | All |
| Fun | News | Humor |
| | Programs | Humor |
| | Series | Comedy |
| | Movies | Comedy |
| Entertainment | Movies | Programs, Western, Drama, Suspense, Film Noir, Other |
| | News | News |
| | Programs | Talk shows, Interviews, Contests, Teenagers, Society, Culture, Variety, Debates, Reality |
| | Series | Fiction, Animation, Drama, Teen, Mystery, Professional, Western, Soap Operas, Comedy, Action/Adventure |
| Erotic | Series | Erotic |
| | Movies | Adult |
| Soccer | Sports | Soccer |
| Children / Family | Series | Children, Animated |
| | Movies | Children |
| Information | News | Notices, Weather, Reports, Interviews, Debates, Economics, Politics, Other |
| Music | Programs | Music, Cultural |
| | Movies | Musical |
| Romance | Series | Soap Operas |
| | Movies | Romantic |

The information depicted in Table 1 can be utilized as follows. A user would request educational content and would thereby be presented with a list of news, programs, series, and movies that have education content. According to another aspect, a user could request all broadcast content that is "inspirational" would be presented with a list of programs that have an inspirational keyword associated with it.

Another useful feature is the matching of broadcast content with certain users based upon information stored in the user profiles. This matching feature can occur at the media server 300 level, at the media center level 334, or at both levels, depending upon the specific embodiment. The first example, matching at the media server 300 level, is described below.

The first step of matching at the media server 300 level is to create a user profile corresponding to a specific user. The user profile may be comprised of a variety of data, such as user profile data provided by the user, demographic data provided by the user, or user viewing history data provided by the media center 334. The matching process can be handled by the user profile server 310 depicted in FIGURE 3. After the user profile is created, the content manager/scheduler 312 may occasionally query the user profile server 310 to determine if there are any users or communities that would find a particular program to be of interest. For example, a sports program featuring a city's team would likely be of interest to all users from that city. Accordingly, the content manager/scheduler 312 would place a tag in the program database corresponding to the relevant users or community. As a result, when the EPG data corresponding to this program is transmitted to the media centers 334, all media centers 334 corresponding to the tagged users or tagged communities would receive a special note regarding the program. This special note can be in the form of a window that is presented to the user when he/she accesses the EPG.

The matching feature can also be implemented at the media center 334 level. According to this process, the HDD 340 at the media center 334 would further comprise a user profile database. This user profile database can comprise demographic information, viewing history, or viewing preferences. The types of information stored in the user profile database can be configured by the user based upon his/her preferences. Furthermore, by keeping the user profile information at the media center level, the user will have fewer concerns about maintaining the privacy of his/her demographic information, viewing preferences, and viewing history. As EPG data is provided to the media center 334, the HMC configuration agent 336 can utilize the user profile information to select program content that may be desirable to a particular user, and discard program content that is not. If certain programs are found to be desirable to a user, the user could receive a special note regarding the program when viewing the EPG. This special note can be in the form of a window that is presented to the user when he/she accesses the EPG.

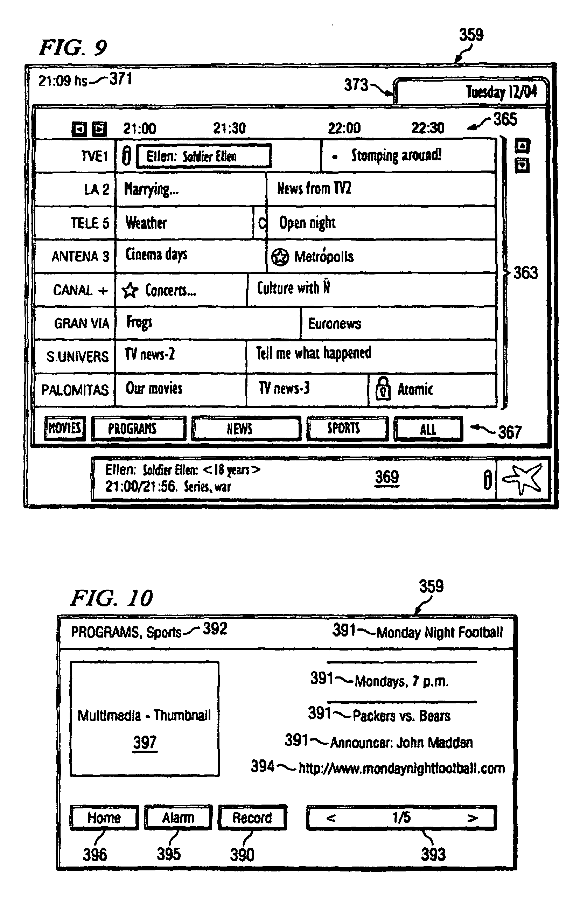

Another aspect of the EPG database 361, a synchronized electronic program guide, is described below. One embodiment of an electronic program guide screen 359 utilizing the data in the EPG database 361 is depicted in **FIGURE 9**. In FIGURE 9, a program grid 363 is depicted as comprising a time bar 365 across the top of the grid, a plurality of rows corresponding to different broadcast channels, a category selection bar 367, a program summary bar 369, a clock 371, and a calendar 373. The program grid 363 summarizes the programs that are available during a certain time frame, as indicated by the time bar 365. In addition, the program grid 363 also indicates the scheduled start and stop times for each of the programs appearing in it. The category selection bar 367 comprises several buttons, each of which corresponds to a unique category of content that is to be broadcast. For example, in FIGURE 9, buttons corresponding to movies, programs, news, sports, and all programs are present in category selection bar 367. By selecting one of these categories, a customized electronic program guide window listing only that type of content will be presented. As can be seen in FIGURE 9, the last channel viewed will continue to be played in the background of the program guide screen 359. Another useful feature of the electronic program guide is a program summary bar 369 that appears at the bottom of the screen 359 in FIGURE 9. The program summary bar 369 presents a brief summary of the program that is selected in the program grid 363, as well as other relevant information such as the start and stop time and an indicator specifying whether the program has been set up for a reminder for automatic recording at a later time.

Another embodiment of an electronic program guide screen 359 utilizing the data in the EPG database 361 is depicted in **FIGURE 10.** The screen shot 359 of FIGURE 10 is an exemplary screen shot that may be used with the embodiments described in this application. This screen shot includes a record button 390, such as would be found in currently existing program displays employed with digital video recording systems, as well as descriptive elements 3912004, categories 392, and navigation buttons 393. This screen shot also includes elements such as a hyperlink 394, which would direct the user to a website specific to or of interest for the particular program being described. It also includes the capability enabled through a button 395 to alarm or alert the user upon the scheduled zone of the program being described with the screen 359. Thus, rather than recording the particular program at the scheduled time, the Media Center 334 can alert a user through the display by using an audible alert, a visual alert, or through a separate communication such as an electronic message to the user's personal e-mail account or pager. The display also includes a "home" button 396 that the user can click to return to the user's personal home page on the media center unit 334. Also included within the screen 359 is a descriptive thumbnail image for the program being described. The use of a media center 334 including a large storage area, such as a hard disk drive, provides surprising advantages as to the content that can be displayed or played within the thumbnail 397. For instance, this thumbnail can include a still image, a motion video image, and sound images either by themselves or to a company the motion video image.

One feature of the electronic program guide is the ability to select a program to be recorded at a later date. This can be done by selecting a program that appears in an electronic program guide window and selecting a "record" icon or button. When this is done, a "record" tag is associated with the program's information in the media center 334. Several additional steps also occur to insure that there are not any conflicts with other program record settings. For example, it could be that another program is set to be recorded at the same time on another channel. If such a conflict exists, then the media center 334 will either notify the user of the conflict or use an automatic conflict resolution module to resolve the conflict.

Another relevant feature related to recording is the ability to make a hot recording of a preferred channel during times where the live encoding components of the DVR would otherwise be unused. Thus, for example, if the user is not watching live TV and the DVR is not being used to make video recordings, then the DVR can be configured after a certain period of time of this type of inactivity to make a working-copy recording of programs currently in progress on a user-selected hot record channel. This allows users to, upon returning to a video display screen and if they discover upon returning to the video display screen that a favorite program is on, to capture a recording of that favorite show going back to the program start time.

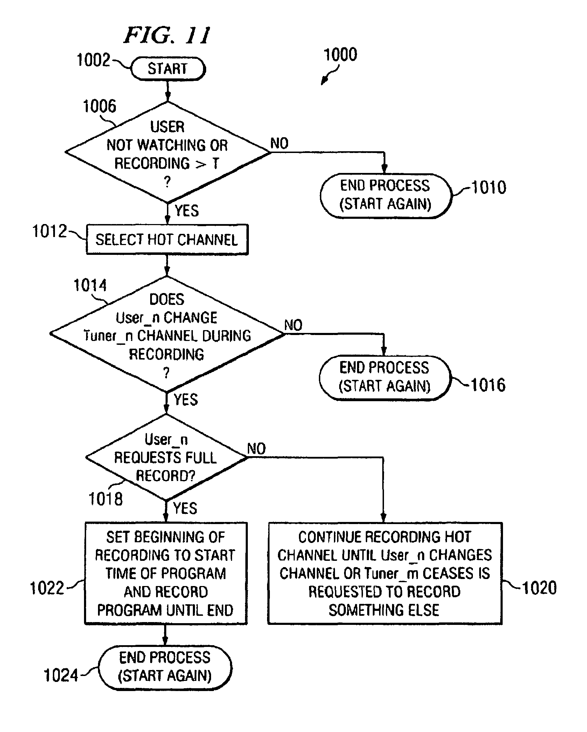

Referring now to **FIGURE 11**, a flowchart 1000 is shown here for the operation of a DVR system employing the hot channel record feature. The process starts at Start Block 1002. At Block 1006, the system checks to see if the user has been inactive from watching live television or recording live television for a set period of time "T," where T, for example, could be any period of time, and where an exemplary time period might be 10 minutes. If it is determined that the user is watching or recording, the process moves to Block 1010, where the process ends and starts again, as described above.

If it is determined that the user is not watching or recording, the process moves to Block 1012, where a hot record channel established by the user is selected, so that recording programming on the associated user's hot record channel (i.e. the user corresponding to the current user space) may begin. The hot record channels can be either a defined favorite channel of the users or it could be the most recent channel the user had been viewing before the user had switched to other activities, such as audio, text, web-browsing, or watching recorded content. Because of physical limitations, at least with the use of a hard disk drive mass memory storage unit, this ability to record hot channel programming may be further limited by physical limitations of the recording system. As a further part of this process, it maybe desirable to wait until the beginning of a new program on the hot record channel before beginning to record. Thus, the hot record operation could be held in stand-by until the beginning of a new program. This is because it would be impossible to recapture the beginning of a program that was already in progress when the hot record recording begins, so it maybe advantageous to simply wait until the beginning of the next program in sequence before starting the recording.

Since a single set of recording resources is employed in this embodiment on behalf of a user of the DVR system, during operation of the system a complete recording is preserved only if the user does not change channels during their use of the system. Accordingly, at Decision Block 1014, if the user changes channels, the process ends, as shown at Block 1016, and begins again as described above. If the user does not change the tuner channel during recording, the process moves to Block 1018.

If instead of changing channels within the user's user space, the user instead requests a full recording of the program (per Block 1018) in progress on the user's hot record channel, then the process moves to Block 1022, and sets the beginning of the recording to the start time of the program in progress and records that program until its end. At that point, the operation would cease, at Block 1024, and the user would have available to them in their personal user space a recording that was made from that user's hot record channel. Still referring to FIGURE 1, if the user does not request a full record, the process moves to Block 1020 until the user changes the channel or until the DVR is requested to record something else by the computing unit of the DVR, or until the hard disk drive management process limits the operation of the hot record feature.

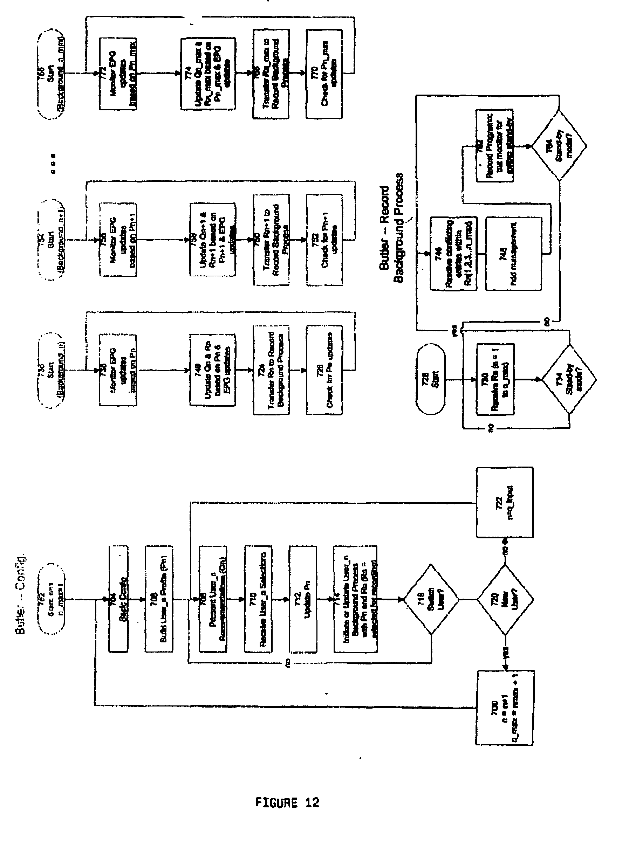

The automatic recording agent is another useful feature that takes advantage of the Electronic Program Guide. **FIGURE 12** is a flow chart for the configuration and operation of the automatic recording agent (the "Butler"), in accordance with an exemplary embodiment. The concept of the automatic recording agent is to use standby recording capacity within a media center 104 to record programs that, according to a user profile, are likely to be of interest to the user. In the media center described in this embodiment, there are a number of users, each of whom is provided a user space such that each of the different users has a unique interface to the media center, where that interface includes the channels the user has, the set-up of the user's home page and the options presented thereby, the scheduled recordings, and the programming recorded for the user by the automatic recording agent. Based on the users' profiles, the automatic recording agent process can make programming suggestions for each user based on their determined individual personalities or profiles.

Many fields could be defined for the user profile set-up; for the present example, the fields used are Category, Rating, Commercial Rating, Country, Year, Release Year, and Original Soundtrack. The user can configure the media center with their profile using basic settings such as movie fan, soccer fan, kids only, investigate reports, music fan, or documentary fan, or the user can use advance settings, particularly in the prior example for sports and movies. The user profile as set up above will determine the inquiry that is made by the automatic recording agent against the EPG to select programs for recording

Once the user profile has been developed as described above, at Block 708, the media center 104 is then operable to present through its display 7, a set of user recommendations, which is represented by the matrix (Qn). Still referring to Block 708, the media center 104 may present the suggested recordings or recommendations to the user by presenting lists of suggested programs on the display, when that user is logged in under the user's name. The lists may be provided to the particular user with selection items, such as check boxes on the screen or with other types of targets by which a user can indicate that the user would like to retain the particular recording. By also making notes of which program the user elects to retain the recording, the media center is able to refine its user profile (Pn) such that it more accurately reflects the actual preferences of the system. Thus, at Block 712, the user profile (Pn) is updated based on the user_n selections from the list of recommendations made available to the user at Block 708. Once the user profile (Pn) has been updated with the user selections, the process at Block 714 would then initiate or update a background process for user_n, for the background updating of user recommendations (Qn) and the user_n selections (Rn).

Decision Block 718 provides for the transfer of program execution in the event that there is not a switching of users. If there is no user switching, the process returns to block 708 where the present user's user_n recommendations (Qn) are updated. If the user is switched at block 718, the process continues to Decision Block 720, where it is determined whether the newly switched user is a new user or an existing user. If the user_n is a new user, then the n counter is increased by one (n = n + 1), and the maximum number of users is increased by one (n_max = n_max + 1). If, at block 720, it is determined that the newly switched user is not a new user, but rather an existing one, then the n associated with the particular user is received from the program interface, and program execution returns back to block 708 where recommendations (Qn) for the existing user are provided.

Returning to decision Block 720, where a new user was detected, at Block 700 the n index counter is increased by one and the n_max index is also increased by one. Once these steps have occurred, the process returns back to Block 704 for the basic configuration of the new user, as well as the remaining configuration steps for that user, as previously described.

The background processes for users n, n + 1, ... n_max (736, 754, and 766) are shown in FIGURE 12 as three parallel operating processes by which the respective users' recommendation list (Qn) and recording selections (Rn) are updated in real-time based upon downloaded and new electronic program guide (EPG) updates based on user profiles (Pn). More specifically, within the first of these background processes, the program execution proceeds from the monitoring of the EPG updates based on the users profile (Pn) at Block 738, to the updating of the user recommendations (Qn) and selections (Rn) at Block 740. The selected recordings are then transferred to the background record process at Block 724, which is also illustrated in FIGURE 12. At Block 726, checking for user profile (Pn) updates is performed from the set-up or configuration steps set forth at the beginning of the automatic recording agent configuration process (e.g., Blocks 702 and 704). As illustrated, once the end of the first background process is reached, the program execution returns again to the monitoring of the EPG updates based on the user profile (Pn). The parallel processes follow a similar flow, simply for updated numbers of users (n+1; n_max).

The background record process is illustrated and defined as a separate process beginning with the start Block 728. At Block 730, the background record process receives selected programs for recording for all the applicable users (Rn for n = 1 to n_max). As indicated by decision Block 734, the automatic recording agent background record process only occurs when the media center is operating in stand-by mode. If the media center unit is not is stand-by mode, the process will keep looping back to Block 730, where the program selections Rn are updated until the media center is found to be in stand-by mode. Once the media center enters stand-by mode, the background record process is free to continue on to Block 746, where conflicting schedules selected for recording entries Rn (1, 2, 3, ... n_max) are to be resolved. Also embedded within the background record process is a software module for the management of the space on the hard disc drive unit within the media center 104 and on which the program recordings are stored. This hard disk drive management occurs at Block 748. Once any recording schedule conflicts have been resolved, and perhaps during the step of hard disc drive management, programs are recorded on behalf of the requesting users at Block 762. However, also at Block 762, the background record process continues to monitor for a situation where the user is causing the media center to exit stand-by mode. As indicated by decision Block 764, when the media center remains in stand-by mode, program operation continues to flow to Block 746, where the resolution of conflicting record schedules may continue, and the recordings are made. If the media center is determined to exit stand-by mode, the process returns to Block 730 where program selections (Rn) for each user (n=1 to n_max) are again received, until the media center re-enters the stand-by mode.

In addition to embodiment where a single tuner is provided to the media center, and the automatic recording agent function would work during times of stand-by for that single tuner, the principles described above are also applicable to situations in which multiple tuners are used to receive multiple video signals and create parallel video streams. In such an embodiment, all of the video streams could be recorded and transmitted to a media center. In that instance, the automatic recording agent would still work so long as any one of the tuners was in the stand-by mode.

When a program has been selected to be recorded, either by the user or by the automatic recording agent, the media center 334 can utilize a "safe time" buffer before and after each recording in case the program starts early or runs late. For example, if the user selects a program for recording that is scheduled to begin at 7:00 p.m. on Thursday evening and end at 8:00, then the media center 334 will automatically begin recording at a "safe time" (i.e., 5-10 minutes) before the program begins. In addition, the media center 334 will also continue to record the program for a "safe time" (i.e., 5-10 minutes) after the scheduled end of the program. By using these safe times, the media center 334 ensures that no portion of the program is missed from either its beginning or end. Although the use of safe times ensures that the entire program is recorded, additional undesired lead-in and follow-on programming is attached to each recorded program. Accordingly, "hot updates" can be utilized to synchronize the recording start and stop times with the actual start and stop times for a program. Once each media center 334 is aware of the actual start and stop times for a program, the safe time buffers preceding and following the actual start and stop times, respectively, can be erased.

Hot updates can also be used to address the situation where an existing program is running long. For example, a sporting event may run into overtime or a live program may run long. In these situations, existing video recorders that do not receive hot updates would stop recording at the previously scheduled stop time. A media center 334 equipped with the "hot update" feature, however, would be able to receive commands instructing it to continue recording a program that runs long. This feature can be implemented in a variety of ways. According to one embodiment, the media server 300 can instruct the media center 334 to simply continue recording the existing program until it is instructed otherwise. According to another embodiment, the media server 300 can continue to issue "hot updates" every 5-10 minutes, restating the stop time of the program as occurring 5-10 minutes later. This embodiment is consistent with a broadcast model in which the media server 300 is not aware of the recordings settings of each individual media center 334 and assumes that one or more media centers 334 will be affected by any program that runs past its scheduled program time.

As described previously, the "annotation update" enables the annotation of broadcast content as it occurs. For example, if a sports event is being recorded, then the times at which certain periods of the event occur (e.g., innings, quarters, periods, etc.) can be marked and broadcast to the media center 334. In addition, the occurrence of special events, such as a goal in hockey or soccer, or a homerun in baseball, can be marked and broadcast to the media centers 334. This allows a user to select certain key events to view from a particular program that has been recorded. Another aspect of this feature is the marking of commercial interruptions for a broadcast program. By doing this, a viewer can determine when commercial interruptions begin and end for a recorded program.

The individual can also direct the media center 334 to record an entire series corresponding to a program. For example, if the user sees a particular program that he/she would like to record each week, then he/she can select a particular feature that enables the media center 334 to record this program every week. Because the EPG database 361 utilizes data tags identifying the name of the series (i.e., a parent ID), the media center 334 will be able to find the program even if it is moved to a new time.

Although the user may use the EPG interface 359 depicted in FIGURE 9 to select a program for recording, the user also has the capability to manually program the media center 334 to record a particular channel at a particular time. To make the manual recording interface more "user friendly," the user can enter a name and a category for a particular manual recording event. For example, the user can name a manual recording session from 7:00 p.m. to 10:00 p.m. on Thursday night as "Thursday evening television shows" and assign the session to the "programs" category. By assigning a name, it will be easier for the user to remember what the manual recording session is about. Furthermore, by assigning a category, the recording session can be presented in the list of other similar recording sessions. The data entered by the user for a manually recorded program is stored with the other EPG data and becomes searchable by the search interface to the EPG.

Another relevant feature of the electronic program guide is the ability to set an alarm corresponding to the broadcast of an event. For example, an individual using the program guide depicted in FIGURE 9 can set alarms for certain programs to be viewed at later times. By setting an alarm for a program, an alarm tag is attached to the program's information in the electronic program guide database 361 in the media center 334. As the time approaches for viewing the program, an appropriate window will appear on the display screen reminding the individual of the upcoming program.

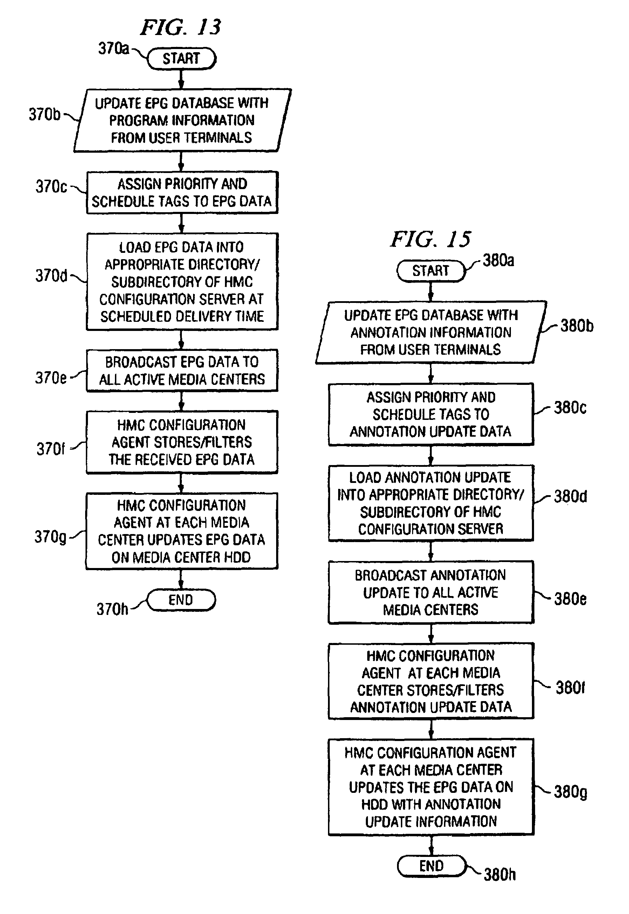

The process by which a "full update" of the electronic program guide database is performed is depicted in **FIGURE 13**. A "full update" is needed to download an entire day's worth of programming to a Media Center 334 and will generally be performed at least once a day. According to one embodiment, a full update will be done one week before the programs' scheduled broadcast time. In FIGURE 13, the process starts (370A) by first updating the EPG database 361 at the media server 300 with program information from the administrative terminals 328 (370B). This data can either be entered manually, or it can be automated based upon data provided by the broadcasters. Next, depending upon the specific embodiment, the content manager/scheduler 312 assigns priority, target data, and a schedule for the delivery of the EPG data to the media centers (370C). After all of the data corresponding to a particular broadcast program has been loaded into the database repository 320, a revised electronic program guide is prepared for transmission to the individual media centers 334. At the designated time, the EPG data will be loaded into an appropriate directory or subdirectory of the HMC configuration server 316, which acts as a transfer queue for the network interface 318 (370D). After this, the EPG data is broadcast to all active media centers 334 (370E). The broadcast of the EPG data from the media server 300 to media centers 334 will typically take place at a time of low network activity.

Depending upon the specific embodiment, the full update will either contain a full set of the EPG data or will contain a plurality EPG data versions, each of which having target ID associated therewith. Accordingly, the EPG data from the full update will be received and processed by the HMC configuration agent 336. If one or more packets of information are missing from a particular transmission, then the HMC configuration agent 336 will wait through two cycles of transmission of the EPG data to ensure that all of the necessary data packets are present. Next, depending upon the embodiment, the HMC configuration agent 336 at each media center 334 will discard all unnecessary EPG data based upon targeting information (370F). After this, the remaining broadcasted EPG data will be stored on the HDD 340 of each media center 334 (370G). At this point, the full update of the electronic program guide database 361 is complete (370H).

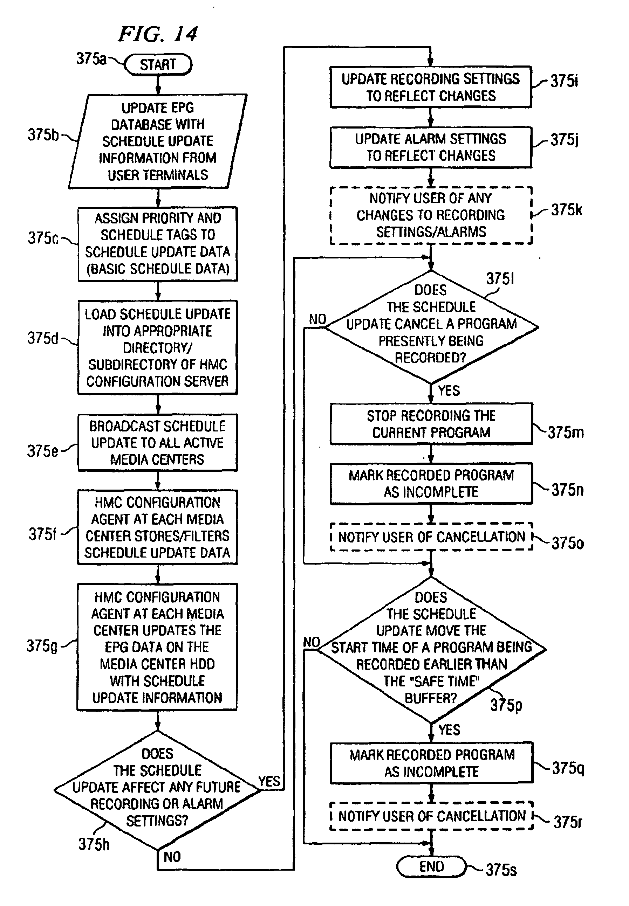

As stated previously, a full update of the electronic program guide database 361 will generally be broadcast once a day from the media server 300 to the media centers 334. However, there will often be a need to update schedule data and other information throughout the day as the broadcasters make changes in their schedules. These changes can result from breaking news flashes or last-minute programming changes. To address these changes, the media center 334 and media server 300 are capable of performing a "schedule update" several times throughout the day. A representative process flow of a schedule update is depicted in **FIGURE 14**.

In FIGURE 14, the process starts (375A) by first updating the electronic program guide database 361 with program information from the administrative terminals 328 (375B). These updates can reflect the changes in programming described above or any other type of update that is being provided. After the EPG database 361 has been updated at the media server 300, the content manager/scheduler 312 assigns any necessary tags such as priority, delivery schedule, or possibly a target ID to the schedule update (375C). At the appropriate time, the schedule update information will be loaded into the appropriate directory/subdirectory of the HMC configuration server 316 (375D). The schedule update information typically comprises only basic data 362, or a subset of the basic data, such as a revised start time and a revised stop time.

After this information is loaded into the HMC configuration server 316, the updated program guide information is broadcasted to all of the active media centers 334 (375E). Upon receiving the updated schedule data, the HMC configuration agent 336 at each media center 334 will either store the schedule data in the HDD 340 or filter out all of the unnecessary versions of the schedule data based upon its associated target data (375F). After this, the HMC configuration agent 336 at each media center 334 will update the EPG data on its corresponding HDD 340 with the new schedule data that has just been broadcasted (375G). After this step, the media center 334 determines if the schedule update affects any future recordings or alarm settings (375H). If the update does affect future recording or alarm settings, then these recording settings (3751) and alarm settings (375J) are updated to reflect the changes. In addition, the user can be notified of any changes to these recording settings or alarms (375K).

Next, the media center 334 determines if the schedule update cancels a program that is presently being recorded (375L). If so, then the recording of the current program is stopped (375M). The recorded program is then marked as being incomplete (375N) and the user can be notified of the cancellation of the recording (3750). After this, the media center 334 determines if the update moves the start time of a program being recorded earlier than the save time buffer (375P). If so, then the program is marked as being incomplete (375Q) and the user can be notified of its cancellation (375R). At this point, the schedule update process is complete at the media center 334 (375S).

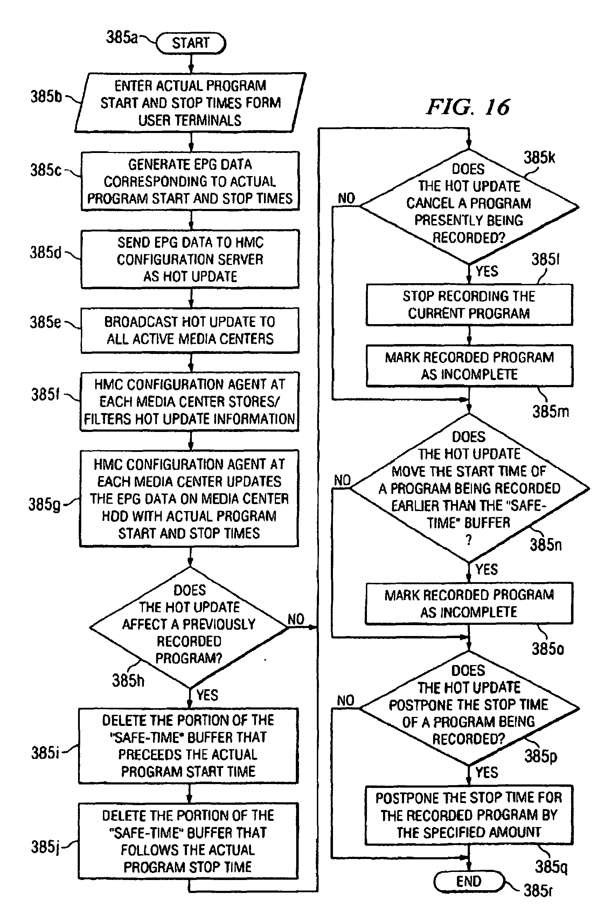

A representative process by which an "annotation update" of the electronic program guide database 361 is performed is depicted in **FIGURE 15**. An "annotation update" can be performed at least once or more per day. In FIGURE 15, the process starts (380A) by first updating the EPG database 361 with annotation information from the administrative terminals 328 (380B). Next, the content manager/scheduler 312 assigns a priority, a schedule for the delivery, and, in some embodiments, target data, to the annotation update (380C). At the designated time, the annotation update data will be loaded into an appropriate directory or subdirectory of the HMC configuration server 316, which acts as a transfer queue for the network interface 318 (380D). After this, the annotation update data is broadcast to all active media centers 334 (380E). Next, the HMC configuration agent 336 at each media center 334 will either store the annotation update, or discard all unnecessary annotation update data (380F). Finally, the EPG data on each of the media centers 334 will be will be updated with the annotation data (380G). At this point, the annotation update of the electronic program guide database 361 is complete (380H).

A flow diagram depicting one embodiment of a "hot update" process is depicted in **FIGURE 16**. According to FIGURE 16, the process starts (385A) when the actual program start and stop times are entered from the administrative terminals 328 (385B). Typically, this occurs after each program is complete. Next, the EPG server 302 generates EPG data corresponding to the actual program start and stop times (385C). This data is then sent to the HMC configuration server 316 as a hot update (385D). Although this data is sent directly to the HMC configuration server 316, it is also stored in the database repository 320 so that a complete copy of the EPG database 361 is maintained at the media server 300. After the HMC configuration server 316 receives the hot update information, it is broadcast to each of the active media centers 334 (385E).

Upon receiving the hot update information, each of the media centers 334 will either store the hot update data or discard any irrelevant hot update information depending upon its associated target data (385F). If the hot update information is targeted to the media center 334, then the HMC configuration agent 336 will update the EPG database 361 on the HDD 340 with the actual program start and stop times (385G). This process may be performed by an HMC configuration agent 336 that is located at each of the respective media centers 334. Next, the media center 334 will determine if the hot update affects any previously recorded programs (385H). If the hot update does affect a recorded program, then the portion of the "safe time" buffer that proceeds the actual program start time will be deleted (3851). Similarly, the portion of the "safe time" buffer that follows the actual program stop time will also be deleted (385J).

After these steps are performed, the media center 334 determines if the hot update cancels a program presently being recorded (385K). If so, then the recording of the program is stopped (385L) and the program is marked as being incomplete (385M) or discarded. The user may be notified of this cancellation in some embodiments. Next, the media center 334 determines if the hot update moves the start time of a program being recorded earlier than the "safe time" buffer (385N). If so, then the program is marked as being incomplete (3850) or discarded. The user may also be notified of the incompleteness of this recording in some embodiments. After this, the media center 334 determines if the hot update postpones the stop time of a program being recorded (385P). If the stop time of the program has been postponed, then stop time for the program will be postponed by the specified amount (385Q). In another embodiment, the stop time of the program will be postponed indefinitely, until a stop command is issued at some later point in time. At this point, the hot update process is complete (385R).

The movements of series and the updating of start and end times of programs makes it important to be able to resolve and clear conflicts in accordance with changing program schedules. In some applications, the processes for resolving schedule conflicts may be different for programs that are fully or substantially overlapping relative to programs that are almost abutting. The discussion below describes such an embodiment in which these processes are distinct, but the scope of the claims set forth in any patents issuing from this application shall in no way be construed to cover only such specific embodiments and should instead be construed based upon the specific language of those claims and equivalents thereof.

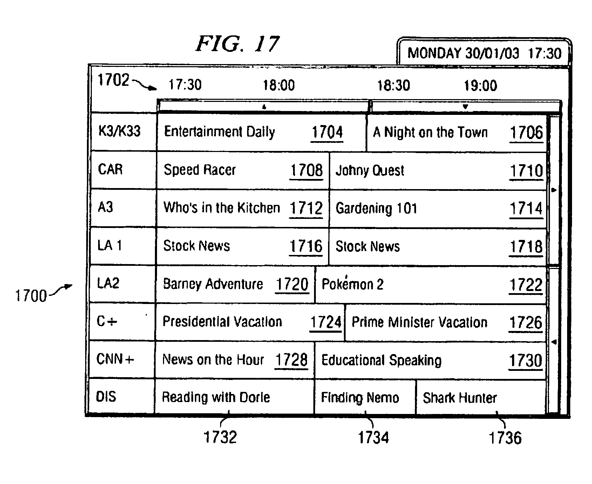

**FIGURE 17,** which comprises a screen shot of the EPG user interface screen 1700, provides an illustration of the different ways in which programs can overlap. At the top of the EPG interface screen 1700 is a timeline 1702, which lines up with the programs (1704 - 1736) shown below it. The EPG screen 1700 shown here would comprise in most digital television systems a mere cross-section of available programs, and different cross-sections of the programs can be accessed through key strokes or by paging up or down through the channel listings. Note that in this channel listing, not all the programs end at the same time. For example, on channels T5, A3, and TVE1, the first three programs 1708, 1712, 1716 all appear to be scheduled to end at the same time, which in this example is approximately 6:10 p.m. Three other programs 1720, 1728, 1732 in this example end about 5 minutes earlier, i.e., at approximately 6:05 p.m. Another program 1704, on channel K3/K33 is ending at approximate 6:15 p.m., while yet another program 1724, on channel C+ appears to be ending just a minute or two after that, for example, at 6:17 p.m.

Still referring to FIGURE 17, certain programs appear to be abutting in time, for example, program 1708 would be considered to abut in the program schedule with programs 1710, 1714 and 1718, as would programs 1712 and 1716. Despite that, a user could avoid possible conflict between the recording of programs in the two different timeslots indicated - the 5:30 - 6:15 timeslot and the 6:15 to 7:30 timeslot - by recording the adjacent programs in the same channel. Time variations from one channel to another preclude any confidence that there will not be conflict between two programs on different channels that appear to abut in the programming schedule. Such programs, which appear not to conflict, would also generally be considered as potentially conflicting by the conflict resolution procedures.

Other examples of nearly abutting programs would include programs 1724 and 1706, where the scheduled start time of program 1706 (7:15) appears to just slightly overlap the scheduled in time of program 1724 (7:17) and programs 1716 and 1722, where there appears to be an approximate five-minute overlap between the end of the first program 1716 and the start of the second program 1722.

Other programs appear to completely or substantially overlay in this schedule. For example, of the first programs shown here in the 5:30 timeslot, all of these programs 1704, 1708, 1712, 1716, 1720, 1724, 1728, and 1732 appear to substantially overlap with each other. While the conflict resolution process can monitor these programs for outright changes of schedule, they do not appear likely to be susceptible to having their conflicts cleared by minor schedule variations that may occur. Accordingly, in certain embodiments it may be desirable to treat these conflicts differently and to force a specific choice between the recording of one program and the recording of another.

There will also be many programs that are both non-overlapping and non-abutting. For example, program 1736 is well-separated from at least all of programs 1708, 1712, 1716, 1720, 1728, and 1732, and depending on definitions, even from programs 1704 and 1724. When recording two of these well-separated programs, in general, conflict resolution should be unnecessary, unless one or both of the programs is rescheduled such that they then exist during overlapping time periods.

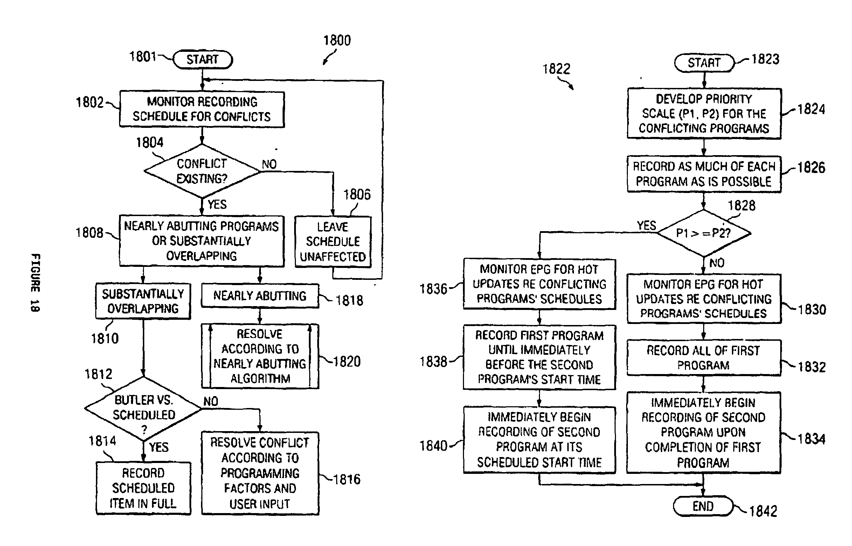

**FIGURE 18** provides a flowchart for the resolution of conflicts that can occur when multiple resources within the system request recording of different video broadcast programs at the same time. For example, in a system having a single tuner, if the recording of two different video broadcasts are requested simultaneously, there will be a conflict. In a system having two tuners, if the recording of three different video broadcasts are requested simultaneously, there will be a conflict. Such conflicts can occur, for example, if multiple users all schedule a recording for the same time, or one of two programs not initially scheduled for the same time is rescheduled, such that it then overlaps with the requested recording of another program.

According to FIGURE 18, then, the general process for conflict resolution 1800 starts at Start Block 1801. The system continually or periodically monitors for schedule conflicts in accordance with Block 1802. Should no conflict exit, the process proceeds, according to Decision Block 1804, to leave the schedule unaffected (per Block 1806) and continues monitoring the recording schedule - with updates both to the requested recordings and the schedules for those requested recordings per the EPG updates - for conflicts at Block 1802.

In certain embodiments, the algorithms for resolving substantially overlapping or nearly abutting conflicts may be different. In those instances, at Block 1808, branch decisions are made according to whether the conflicting programs are substantially overlapping or nearly abutting. If the conflicting programs are substantially overlapping, then the process continues to Block 1810 for "substantially overlapping" conflicts. In the present embodiment, according to a design decision, the programs selected for recording by the automatic recording agent (e.g., "Butler"), are dismissed in favor of those selected by the user as scheduled recordings. Accordingly, at Decision Block 1812, the question is posed whether the conflict is between a recording chosen by an automatic recording agent recording and a scheduled recording. If it is, according to Block 1814, the scheduled item is recorded in full. In general, in the "substantially overlapping" branch beginning at Block 1810, the program that "loses" in the conflict is not recorded at all. Further following Decision Block 1812, if the conflict is not between an automatic recording agent recording and a scheduled recording, then by Block 1816 the higher priority recording is chosen for recording - whether according to a choice between two automatic recording agent recordings or two scheduled recordings.

The second branch, beginning at Block 1818 in this embodiment, handles the "nearly abutting" conflict resolution process, in which the media center 104 attempts to record as much as possible of both competing programs. Within this second branch, from Block 1818 operation of the program proceeds to Block 1820, where the conflicts are resolve according to an algorithm for handling these nearly abutting programs. The nearly abutting process essentially calls a sub-routine, illustrated as 1822 in FIGURE 18.

An exemplary process for the resolving of the conflict is illustrated beginning at Block 1823, and at Block 1824 the algorithm develops a priority scale designated as P1, P2 for the conflicting programs, where the P1 indicates a weighted importance number for the first program in the sequence, and wherein P2 indicates a weighted priority number for the second program in the sequence. At Block 1826, the recording process continues for the first of the recordings such that the first program is recorded as much as possible up until when the conflict arises between the two adjacent, or nearly abutting, programs. At Decision Block 1828, however, the two programs are conflicting, and, therefore, a decision has to be made as to which of the two programs should receive the priority for the recording. Regardless of whether or not the first program or the second program has the higher priority number, given the importance of the program schedules and the small overlap between them, it is especially important that the latest EPG update have been received when resolving the conflict between the two slightly overlapping programs. Therefore, in both branches, at Block 1830 and Block 1836, the process monitors the EPG for scheduled updated, hot updates and other program updates, such as annotation updates, regarding the program schedules for the conflicting programs.

There are several possible annotation updates that might be particularly useful in resolving slightly overlapping program conflicts. For example, television shows and movies will often include credits at their end. If an annotation update was included at the end of such programs, users may be happy to forego having those credits in order to transfer recording to the second program of the two conflicting, nearly abutting programs. Sports programs often have pre-game introductions and other coverage, and will also often include some post-game summary. Annotation marks placed at the beginnings and endings of such programs could enable the recording of the particular pre- and post-game coverage to be foregone in favor of other scheduled recordings.

If the conflict is resolved by the hot updates, schedule updates, and/or annotation updates, then the start time for the second program or the end time for the first program would be shifted in such a way that both programs can be recorded without losing any content of interest. If, however, the conflict cannot be resolved through such updates, then factors are weighed between the two programs to decide which of the two programs should be recorded in its entirety and which should be cut-off (at its beginning or end, depending on whether the cut-off program is the first of the two programs or the second).

The process from Block 1832 weights various factors in deciding which of the two conflicting programs should be cut off, and which should be recorded in its entirety. Annotation updates could be used in this portion of the process as well or instead of Block 1836, as described above. For example, if a program would only have its credits cut off, or if a sports event would only have pre- or post-game coverage cut off, then that program could be given a low priority number for the resolving of the conflict between the two programs. Of course, other factors could be used in weighing between the two programs. In an advantageous embodiment, programs scheduled by the users would generally have higher priorities than those suggested by the automatic recording agent, and, in certain embodiments, the user-scheduled programs are always recorded in their entirety over those suggested by the automatic recording agent. As another example, if one of the programs is going to be broadcast at a later time, then the other program that perhaps is only appearing once or is appearing at its last scheduled appearance should have the higher priority than the other program. The programs scheduled by or suggested for certain users may be assigned to have higher priority than the programs of other users, such as, for example, the parents and administrators of the media center may have a higher priority for their recordings than would children in the household. Certain types of programming may also be given a higher priority than others. For example, news programs might be given a higher priority than sports, dramas or comedies, and sports may be given a higher priority than dramas or comedies. These preferences could, if desired, be set up by the system administrator and/or the users of the media center 104.

Having assigned priority factors, if the first program priority factor (P1) is greater than or equal to the second program priority factor (P2), then, according to Block 1832, all of the first program would be recorded. According to this path, the second program would then be immediately recorded upon the completion of the recording for the first program. The second branch, when P2 is greater than Pl, begins at Block 1836. At Block 1838, the first program is recorded up until immediately before the second program's most-recently-updated start time, or up until some time that has a small safety margin relative to the beginning of the second program. At Block 1840, the second program is immediately recorded at its schedule start time whereas the first program would be cut-off immediately at that time.

While various embodiments constructed and operated according to the principles disclosed herein have been described above, it should be understood that they have been presented by way of example only, and not limitation. Thus, the breadth and scope of the invention(s) should not be limited by any of the above-described exemplary embodiments, but should be defined only in accordance with any claims and their equivalents issuing from this disclosure. Furthermore, the above advantages and features are provided in described embodiments, but shall not limit the application of such issued claims to processes and structures accomplishing any or all of the above advantages.

Additionally, the section headings herein are provided for consistency with the suggestions under 37 CFR 1.77 or otherwise to provide organizational cues. These headings shall not limit or characterize the invention(s) set out in any claims that may issue from this disclosure. Specifically and by way of example, although the headings refer to a "Technical Field," such claims should not be limited by the language chosen under this heading to describe the so-called technical field. Further, a description of a technology in the "Background" is not to be construed as an admission that technology is prior art to any invention(s) in this disclosure. Neither is the "Brief Summary" to be considered as a characterization of the invention(s) set forth in issued claims. Furthermore, any reference in this disclosure to "invention" in the singular should not be used to argue that there is only a single point of novelty in this disclosure. Multiple inventions may be set forth according to the limitations of the multiple claims issuing from this disclosure, and such claims accordingly define the invention(s), and their equivalents, that are protected thereby. In all instances, the scope of such claims shall be considered on their own merits in light of this disclosure, but should not be constrained by the headings set forth herein.

## Claims

1. A method of recording broadcast programs with a recording device, the method comprising: receiving electronic program guide data over a communication network, the electronic program guide data comprising broadcast program data associated with broadcast programming and used to generate an electronic program guide for display to a programming viewer, the broadcast program data comprising program start time and program end time; scheduling recording of the broadcast program by the recording device for a recording period based on the electronic program guide data, the recording period comprising a safe time; recording the broadcast program to a storage medium in the recording device; the method **characterized in that** when the broadcast program has finished broadcasting, generating electronic program guide data comprising post program data comprising a post start time and a post program end time; and deleting from the storage medium any safe time recording occurring before the post program start time or after the post program end time.

2. A method according to claim 1 further comprising determining if the post program data affects a program currently being recorded.

3. A method according to claim 2 further comprising stopping the recording of the program if it is affected.

4. A method according to claim 3 further comprising marking the recording as being incomplete or discarded.

5. A method according to claim 3 further comprising notifying the user of the cancellation.

6. A method according to claim 1 further comprising determining if the post program data includes the postponement of an end time of a program being recorded and extending the record time of the program.

7. A method according to claim 1 further comprising storing the post program data in a centralized database repository connected to the electronic program server.

8. A method of recording broadcast programs with a recording device, the method comprising: receiving electronic program guide data over a communication network, the electronic program guide data comprising broadcast program data associated with broadcast programming and used to generate an electronic program guide for display to a programming viewer, the broadcast program data comprising program start time and program end time; scheduling recording of the broadcast program by the recording device for a recording period based on the electronic program guide data, the recording period comprising a safe time; recording the broadcast program to a storage medium in the recording device; the method **characterized in that** when the broadcast program has finished broadcasting, generating electronic program guide data that comprises a post program start time so that a playing of the recording can commence at the post program start time.

9. A method according to claim 1 wherein the communication network comprises a packet-based network.

10. A method according to claim 1 wherein the communication network comprises one of a digital terrestrial network, a digital cable network, a satellite network or the internet.
